(19) **Europäisches Patentamt / European Patent Office / Office européen des brevets**

(11) **EP 4 183 125 B1**

(12) **EUROPEAN PATENT SPECIFICATION**

(45) Date of publication and mention
of the grant of the patent:
**31.12.2025 Bulletin 2026/01**

(21) Application number: **21735190.7**

(22) Date of filing: **15.06.2021**

(51) International Patent Classification (IPC):
**H04M 1/72454** (2021.01)    **G06F 1/3231** (2019.01)
**H04M 1/02** (2006.01)

(52) Cooperative Patent Classification (CPC):
**H04M 1/72454; G06F 1/3231; H04M 1/0266;**
**Y02D 10/00**

(86) International application number:
**PCT/EP2021/066134**

(87) International publication number:
**WO 2022/012833 (20.01.2022 Gazette 2022/03)**

(54) **ADAPTIVE PROXIMITY DETECTION SYSTEM**

ADAPTIVES NÄHERUNGSERKENNUNGSSYSTEM

SYSTÈME DE DÉTECTION DE PROXIMITÉ ADAPTATIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **15.07.2020   US 202063052211 P**

(43) Date of publication of application:
**24.05.2023 Bulletin 2023/21**

(73) Proprietor: **ams International AG**
**8645 Jona (CH)**

(72) Inventors:
• **YADAGIRI, Vasanth Swaroop**
**5656 Eindhoven (NL)**
• **ADUSUMALLI, Ravi Kumar**
**5656 Eindhoven (NL)**

(74) Representative: **Ding, Yuan**
**Osram GmbH**
**Marcel-Breuer-Straße 4**
**80807 München (DE)**

(56) References cited:
**EP-A2- 2 713 586        CN-A- 107 219 515
US-A1- 2016 179 265    US-A1- 2016 259 462**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD

This specification relates to proximity detection systems for mobile devices.

BACKGROUND

Mobile phones typically incorporate a proximity sensor to disable the display and touch sensing when a user lifts the phone to their ear. These normally use infrared light to sense proximity of the user's head by reflection, but optical noise is a problem. One type of optical noise is flicker from grid mains powered lighting. Another source of noise is shot noise in high ambient light conditions. Normally shot noise is prominent at low light levels when single photons are counted, but shot noise increases with light level especially when integration periods are short. As signal level increases shot noise in the signal becomes relatively less, but in a proximity detector where reflected infrared light is being detected shot noise from the ambient (infrared) light can be a problem at high ambient light levels and short integration periods.

There is a general need to increase the reliability of proximity detection systems for mobile devices. As described later, there are particular problems when the proximity sensor is behind the mobile phone display, which is otherwise desirable for aesthetic reasons e.g. to reduce or remove the mobile phone notch.

General background prior art can be found in: US2014/252212, US8692200, and US9608132. US2014/252212 discloses a signal conditioning circuit for a proximity light sensor to improve robustness of the detection. By means of a coupling stage, the signal conditioning circuit can account for various signal sources which deteriorate the sensor signal. For example, the first sensor signal can be the main detection signal, i.e. light reflected from a target and ambient light, and the second sensor signal can be an ambient light signal with no detection signal present. An offset signal can be derived from the first and second sensor signals and can be used to improve the robustness of a measurement of a light sensor. In US8692200, circuits and corresponding methods are described that improve the dynamic range, sensitivity and detection range of an optical proximity sensor by cancelling the contributions of DC current signals arising from ambient light signals that otherwise would dominate the detected small AC signal currents. US9608132 discloses an optical sensor arrangement comprises a light sensor that is connected to a summation node and is designed for generating a sensor current and a current source connected to the summation node and designed to provide a source current. Moreover, the optical sensor arrangement comprises an integrator and a sum and hold circuit. The source current may be determined such that it has a value comparable to the value of the sensor current if only ambient light falls on the light sensor. Thus, a saturation of the integrator and of the following sum and hold circuit can be avoided.

Another prior art document US2016/259462 discloses a mobile device. The mobile device includes an infrared emitter and a proximity sensor. The infrared emitter emits an infrared ray using first power in a first mode or emits the infrared ray using second power in a second mode. The first mode of the infrared emitter may be used to detect whether an upper cover is close to the mobile device, while the second mode of the infrared emitter may be used to detect whether a user is close to the mobile device. There is no means disclosed how to increase the accuracy of detecting whether a user is close to the mobile device.

SUMMARY

In one aspect there is therefore described a proximity detection system for a mobile device. The proximity detection system comprises an infrared emitter to emit infrared light, an infrared detector to detect the infrared light after reflection from a target and to provide a detector signal; and a signal processing subsystem. The signal processing subsystem is configured to control the proximity detection system into a first, detect mode for detecting proximity of the target as the target approaches the mobile device, and after detection of the target to control the proximity detection system into a second, release mode for detecting movement of the target out of proximity to the mobile device. The signal processing subsystem is also configured to control the proximity detection system wherein for a given proximity of the target to the mobile device, the detector signal reduces when the mode switches from the detect mode to the release mode by reducing an optical energy output of the infrared emitter and/or by reducing a gain of analogue or digital signal processing circuitry processing an output from the infrared detector. The optical energy refers to optical energy, or power, averaged over a period of time.

This implementation increases the reliability of the system by reducing the detector signal when the mode switches to the release mode (counter-intuitively, the reverse of conventional hysteresis). The system increases a difference between the detect and releases thresholds, and therefore increases a ratio of this difference to the detector signal noise, the detector signal noise depending in part on the ambient light shot noise. An effect of this is to reduce the number of false target detect/release events. This is generally useful but can be particularly important when the proximity sensor is behind a display, e.g. a mobile phone display, and there is attenuation by the display stack.

In some implementations the infrared emitter is controlled to emit a first level of optical energy in the detect mode and a second, lower level of optical energy in the release mode. For example the optical energy may be controlled by controlling a drive level, e.g. drive current, to the infrared emitter, and/or a number of optical pulses from the infrared emitter, and/or a pulse length of infrared light from the infrared emitter, and/or a number of infrared emitters, if there multiple infrared emitters are present. In implementations the signal processing subsystem is programmable to control one or more of these factors to control the optical energy. In a similar way in implementations the detector signal responds to the average optical energy, or average power, e.g. by integrating the detected infrared light over a detector integration time.

In some implementations the proximity detection system may interface with the mobile device, more particularly with device software such as an application or the operating system running on the mobile device, using a handshaking protocol. This can help to synchronise the operation of the proximity detection system and the device software.

More particularly, the signal processing subsystem may be configured to generate a proximity detect signal for the mobile device on detection of proximity of the target, to enable the mobile device to perform an action i.e. a post-detect action. In some implementations the signal processing subsystem is configured to control the proximity detection system into the release mode only after receiving a signal, e.g. a release enable signal, from the device software that indicates that the post-detect action has been performed by the mobile device e.g. in response to the signal. When the proximity detection system is in its release mode it may be switched back into the detect mode after receiving a signal, e.g. a detect enable signal, from the device software that indicates that an action, i.e. a post-release action, has been performed by the mobile device. In some other approaches the proximity detection system may be switched back into the detect mode after a time period. The device software may signal to the proximity detection system by controlling a value in a register of the system.

In some implementations the proximity detect signal is a detect interrupt signal generated by the signal processing system for the mobile device e.g. an interrupt signal generated by the signal processing subsystem for a processor of the mobile device. The signal processing subsystem may also be configured to generate a release interrupt signal for the mobile device, similarly an interrupt signal generated by the signal processing subsystem for a processor of the mobile device, when the proximity detection system detects movement of the target out of proximity to the mobile device. This can simplify interfacing between the proximity detection system and the mobile device.

The proximity detection system may generate a proximity detect signal and/or a corresponding release signal e.g. as previously described but this is not essential. For example in some implementations the device software may interrogate a value dependent upon the detector signal e.g. in a register of the proximity detection system.

In some implementations the proximity detection system is configured to store one or both of a detect threshold value and a release threshold value in a respective programmable detect threshold register or programmable release threshold register. The signal processing subsystem may then be configured to compare a value derived from the detector signal with a value in the detect threshold register and/or a value in the release threshold register to generate the proximity detect signal or a corresponding release signal. Providing an ability to program these thresholds enables a user to configure the system for a target (maximum) failure rate, that is a target false detect/false release rate, as described in detail later.

In some mobile device applications there can be crosstalk between the infrared emitter and detector. For example particularly but not exclusively this can be a problem when one or both of these are located behind a display. Further, because the effective sensitivity of the system is different in the detect and release modes the crosstalk may also be different in each mode.

Thus in some implementations the proximity detection system is configured to store a crosstalk calibration value for each of the detect mode and the release mode. An analogue front end or the signal processing subsystem may then be configured to apply the respective crosstalk calibration value to the detector signal (or value derived therefrom) in each of the detect mode and the release mode. This may be done e.g. by applying an offset to the detector signal (or value derived therefrom) based on the respective crosstalk calibration value. The proximity detection system, in particular the signal processing subsystem, may automatically apply the appropriate crosstalk calibration value according to the mode of operation.

In some applications the mobile device, e.g. mobile phone, has an OLED (organic light emitting diode) display and one or both of the infrared emitter and the infrared detector is located behind the OLED display. The techniques describes herein are particularly useful for such applications, as the display stack optical transmissivity may be low and reliable operation in high ambient light conditions can be challenging. A potential further advantage is that an optical power of the infrared emission may be lower than would otherwise be needed, reducing screen distortion: shining IR light through an OLED display stack can cause OLED pixels to light up resulting in display distortion/artefacts.

One use of the proximity detection system is to detect when a user brings a mobile phone up to their ear to make a call, so that the display can be blanked and/or touch sensing disabled during the call and re-established thereafter. Thus the target detected by the system may be a user's head.

In another aspect a method of detecting proximity of a target to a mobile device using a proximity detection system comprises illuminating the target with infrared light from an infrared emitter, detecting reflected light from the target to provide a detector signal, detecting proximity of the target to the mobile device using the detector signal, then controlling the proximity detection system to reduce the detector signal by reducing an optical energy output of the infrared emitter and/or by reducing a gain of analogue or digital signal processing circuitry processing an output from the infrared detector, and detecting movement of the target out of proximity to the mobile device. The optical energy refers to optical energy, or power, averaged over a period of time.

As previously described in some implementations controlling the proximity detection system to reduce the detector signal comprises or consists of reducing an optical energy output from the infrared emitter. As previously described, detecting when the target moves into/out of a defined proximity to the emitter/detector may comprise comparing a value derived from the detector signal with different detect and release thresholds.

The method may involve setting a difference between the detect threshold and the release threshold to define a false trigger rate of the proximity detection system. The false trigger rate may define a probability of a false detect and/or false release of the target into/from the defined proximity.

A difference between the detect threshold and the release threshold may be used to define a proximity ratio, $P_r$, according to:

$$P_r = \frac{(detect\ threshold) - (release\ threshold)}{6\sigma}$$

where $\sigma$ is the RMS (root mean square) noise level of the detector signal. Setting the difference between the detect threshold and the release threshold to define the false trigger rate may then comprise selecting a value for $P_r$ according to $P_r = \frac{N}{C}$ where $N$ is a number of standard deviations of a distribution of the noise in the detector signal that defines a probability of false trigger, or p-value, corresponding to the false trigger rate and $C$ is a constant between 1 and 5 e.g. between 2.5 and 3.5. The distribution may be assumed to be Gaussian. The value of $C$ depends on an assumed relationship between peak-to-peak and RMS noise. For example the peak-to-peak noise may be taken as $6\sigma$ or $6.6\sigma$ but depends on an assumed time scale of measurement (the longer the time scale the greater the peak-to-peak noise).

Aspects of the above described system, in particular the signal processing subsystem, may be implemented in dedicated hardware i.e. electronic circuitry e.g. on one or more integrated circuits, or in software controlling one or more processors, using a combination of software and hardware. In this specification the phrase "configured to" is to be interpreted accordingly.

Thus computer-readable instructions may implement a system and method as described above, in particular the signal processing. The computer-readable instructions may be stored on one or more computer readable media e.g. one or more physical data carriers such as a disk or programmed memory such as non-volatile memory (e.g. Flash) or read-only memory. Code and/or data to implement examples of the system/method may comprise source, object or executable code in a conventional programming language, interpreted or compiled, such as C, or assembly code, or code for a hardware description language. The code and/or data may be distributed between a plurality of coupled components in communication with one another.

Details of these and other aspects of the system are set forth below, by way of example only.

BRIEF DESCRIPTION OF THE DRAWINGS

Figures 1a and 1b show, respectively, a block diagram of an example proximity detection system for a mobile device, and example locations of an infrared emitter and infrared detector.

Figure 2 shows an example flow diagram of a proximity detection method;

Figures 3a and 3b illustrate operation of the proximity detection system.

Figure 4 shows a flow diagram of an example method of configuring the proximity detection system.

Figure 5 shows a graph illustrating error tolerance against ambient light.

Like reference numerals indicate like elements.

DETAILED DESCRIPTION

This specification describes a proximity detection system for a mobile device, for example a proximity detection system for a mobile phone to detect proximity of a user's head. Implementations of the system have a reduced false trigger rate compared to conventional approaches.

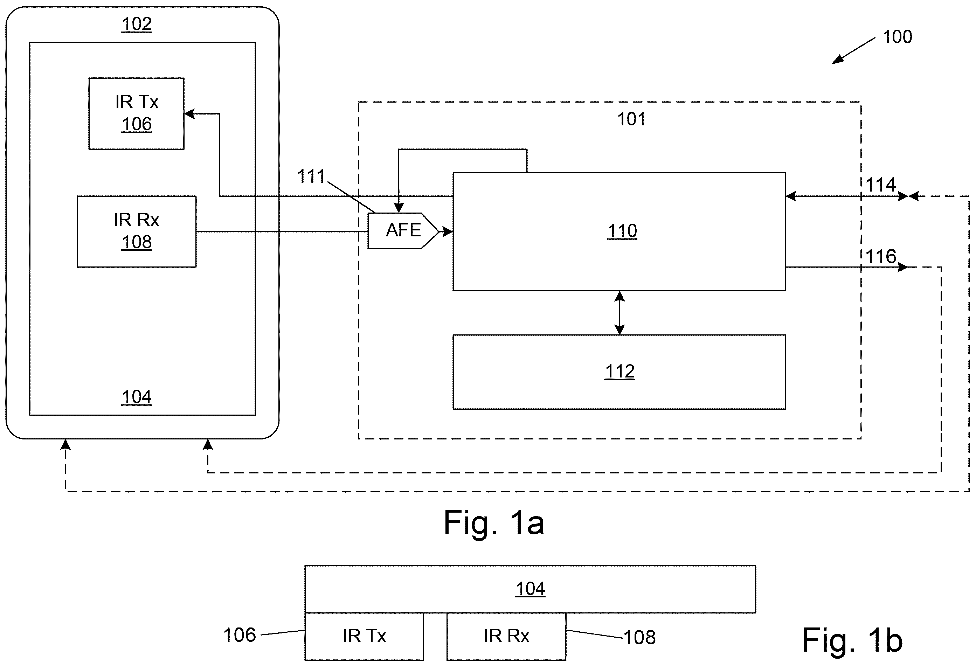

Figure 1a shows a proximity detection system 100 coupled to a mobile device 102. The proximity detection system 100 is shown separate to the mobile device 102 for convenience but would typically be incorporated into the mobile device.

The proximity detection system 100 includes an infrared (IR) emitter 106, an infrared detector 108. The infrared (IR) emitter 106 may be an LED (Light Emitting Diode) or VCSEL (Vertical Cavity Surface Emitting Laser). In this specification infrared light may be light with a wavelength of >700nm, it may have a wavelength <3000nm; as an example only, around 940nm.

One or both of the infrared (IR) emitter 106 and infrared detector 108 may be located behind a display 104 e.g. an OLED display of the mobile device as shown in Figure 1b. In this location IR-blocking parts of the display stack, such as protective barriers or metallization, may be locally removed. In some other configurations one or both of the infrared emitter 106 and infrared detector 108 may be located behind a bezel between the display stack and a device frame.

The proximity detection system 100 includes proximity detection processing 101 which comprises a signal processing subsystem 110 coupled to a set of programmable registers 112. In some implementations these may be on a single integrated circuit. The proximity detection processing 101 provides a drive to the IR emitter 106 and receives an input from the IR detector 108 via an analogue front end 111 e.g. including an analogue-to-digital converter (ADC).

The analogue front end 111 provides a detector signal to the signal processing subsystem 110 representing an optical energy detected by the IR detector 108. The detector signal may represent a time-integrated optical energy e.g. where the IR emitter produces multiple pulses. For example the detector signal may be integrated over a detector integration time e.g. on an integration capacitor. A gain of the analogue front end 111 may be controlled by the signal processing subsystem 110.

The signal processing subsystem 110 has two modes of operation, a detect mode and a release mode, and in operation switches between the two as described later.

The drive to the IR emitter 106 is controlled by the proximity detection processing 101 such that, for a particular target proximity, the detector signal is greater in the detect mode than in the release mode. In implementations an optical (IR) energy output from the emitter is greater in the detect mode than in the release mode. For example signal processing subsystem 110 may control the drive to the IR emitter 106 such that one or more of a drive current, a drive pulse duration, and a number of drive pulses, is greater in the detect mode than in the release mode. The gain of the analogue front end 111 may also be controlled to be lower in the release mode than in the detect mode.

The programmable registers 112 may store configuration data to configure the optical (IR) energy output and/or analogue front end for the detect mode and for the release mode. The configuration data may comprise, for each mode, data defining one or more of: the drive current, the drive pulse duration, the number of drive pulses, and the gain of the analogue front end.

The programmable registers 112 may also store calibration and threshold values. In particular the programmable registers 112 may comprise a programmable detect threshold register and a programmable release threshold register to store respective detect and release threshold values for the detect and release modes. The programmable registers 112 may also comprise a calibration value register for each of the detect and release modes, to store a respective crosstalk calibration value for each mode.

As well as programmable registers 112 the proximity detection processing 101 may include a detector signal register storing a value representing the detector signal i.e. a detected level of infrared optical energy.

The signal processing subsystem 110 also provides an interface to the mobile device e.g. comprising data and/or clock signals 114 for reading from or writing to registers of the signal processing subsystem 110. The interface may also provide one or more interrupt outputs 116 for interrupting a processor of the mobile device.

In some implementations the infrared emitter 106, infrared detector 108, and proximity detection processing 101 may be combined in a single integrated circuit; in others the infrared emitter 106 and infrared detector 108 may be separate.

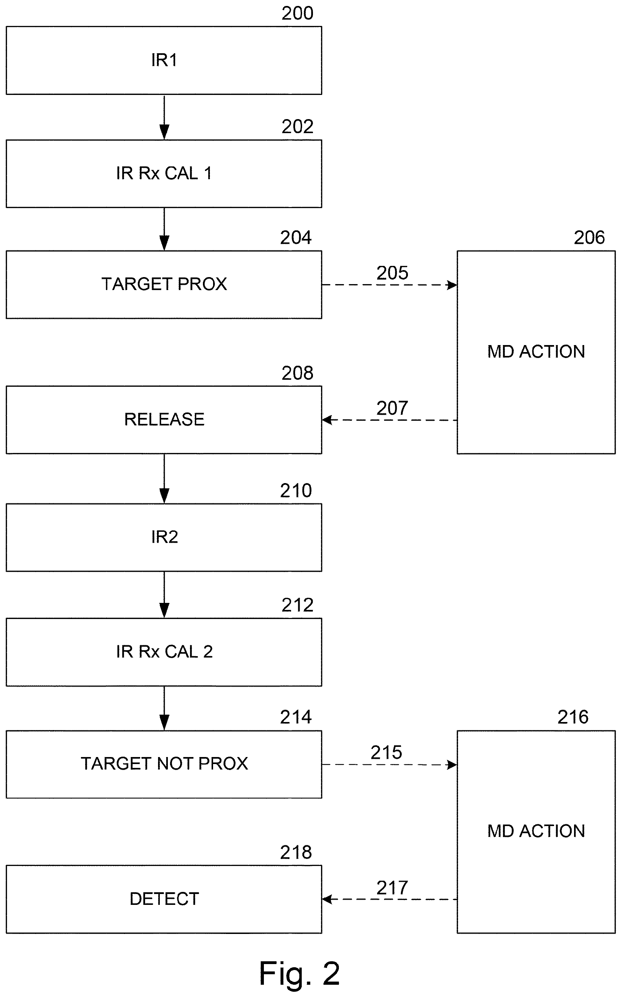

Figure 2 shows a flow diagram illustrating operation of the proximity detection system 100. The process begins with the signal processing subsystem 110 in the detect mode (step 200), in which the drive to the IR emitter 106 is set at a first level to set a first IR light output.

The IR detector 108 detects a first level of IR light reflected by the target to generate the detector signal. The signal processing subsystem 110 may apply an offset value, $P_{offset}$ for the detect mode, to the detector signal to cancel crosstalk between the IR emitter 106 and IR detector 108 i.e. light which reaches the IR detector 108 without having been reflected by the target.

The value of $P_{offset}$ may be read from the programmable registers 112 and in implementations a different value of

$P_{offset}$ is used in the detect mode and in the release mode, e.g. $P_{offset\_detect}$ and $P_{offset\_release}$. The offset value may be applied to the detector signal by subtracting the offset, or by adding a negative offset.

For example when the IR emitter and detector are behind the display the offset arises primarily from reflection within the display stack, and this signal component may be subtracted off. The level of reflection is different in the two modes because the level of optical energy output from the IR emitter is different. The values of $P_{offset\_detect}$ and $P_{offset\_release}$ may be determined using a separate calibration procedure for each optical (IR) energy output e.g. at manufacture per device or for a type of device, or at some other later time e.g. when there is no target nearby, optionally in the dark.

Thus at step 202 the system detects the reflected light, and may then read a first crosstalk calibration value, $P_{offset\_detect}$, from the calibration value register for the detect mode, and apply the first crosstalk calibration value to a value derived from the detector signal. The system may then store the corrected value in the detector signal register.

As a target approaches the IR emitter 106 and IR detector 108 an amount of IR light reflected by the target onto the IR detector 108 increases and the detector signal increases accordingly. The signal processing subsystem 110 compares the detector signal, e.g. the corrected value in the detector signal register, with a detect threshold value in the detect threshold register to detect proximity of the target, i.e. when the target is at a threshold proximity, when the detect threshold value is reached (step 204).

The detected proximity generally corresponds to a distance of the target from the IR emitter 106 and IR detector 108, but the detected proximity may also depend on other factors e.g. a reflectance of the target.

When proximity of the target is detected the signal processing subsystem 110 system changes from the detect mode to the release mode. However in some implementations the system communicates with the mobile device to determine when to change mode.

More particularly in some implementations the mode change is not performed by the signal processing subsystem 110 until it has received confirmation from a processor of the mobile device that a post (target)-detect action has been performed. For example the post-detect action may be to turn off the display or touch sensing on the display.

Thus at step 204, on detection of proximity of the target the system may generate a proximity detect signal 205 to signal the detection to the processor of the mobile device. The proximity detect signal may comprise a flag e.g. a bit set in one of the registers of the signal processing subsystem 110. Also or instead a detect interrupt signal may be generated.

The mobile device may then perform the post-detect action (step 206) and generate a release enable signal 207 indicating that the post-detect action has been performed. The signal processing subsystem 110 may wait for the release enable signal then select the release mode (step 208).

When it enters the release mode the signal processing subsystem 110 sets the drive to the IR emitter 106 at a second level to set a second IR light output lower than the first IR light output (step 210).

The system detects the reflected light, and may then read a second crosstalk calibration value, $P_{offset\_release}$, from the calibration value register for the release mode, and apply the second crosstalk calibration value to a value derived from the detector signal (step 212). The system may then store the corrected value in the detector signal register.

The value in the detector signal register is reduced when the system is in the release mode, but the release threshold value is lower than the detect threshold value so release is not triggered immediately.

As the target moves out of proximity i.e. moves away from the IR emitter 106 and IR detector 108, the amount of IR light reflected by the target onto the IR detector 108 decreases and the detector signal decreases accordingly. The signal processing subsystem 110 compares the detector signal, e.g. the corrected value in the detector signal register, with a release threshold value in the release threshold register to detect movement of the target out of proximity when the release threshold value is reached (step 214).

When release of the target is detected the signal processing subsystem 110 system changes from the release mode back to the detect mode. However in some implementations the mode change is not performed by the signal processing subsystem 110 until it has received confirmation from a processor of the mobile device that a post (target)-release action has been performed. For example the post-release action may be to turn on the display or touch sensing on the display.

Thus at step 214, on detection of movement of the target out of proximity the system may generate a release detect signal 215 to signal the release to the processor of the mobile device. The release detect signal may comprise a flag e.g. a bit reset in one of the registers of the signal processing subsystem 110. Also or instead a release interrupt signal may be generated.

The mobile device may then perform a post-release action (step 216) and generate a detect enable signal 217 indicating that the post-release action has been performed. The signal processing subsystem 110 may wait for the detect enable signal then select the detect mode (step 218).

When it re-enters the detect mode the signal processing subsystem 110 sets the drive to the IR emitter 106 back to the first level to reset to the first IR light output.

A proximity ratio, $P_r$, can be defined as

$$P_r = \frac{(detect\ threshold\ value) - (release\ threshold\ value)}{6\sigma}$$

where $\sigma$ is the RMS (root mean square) noise level of the detector signal and $6\sigma$ is one measure of the peak-to-peak noise. Broadly, a larger proximity ratio corresponds to a reduced false trigger rate.

One way to increase the proximity ratio would be to decrease the noise, i.e. the denominator. This may be done by decreasing the thermal noise, but this requires decreasing the photodiode area and/or increasing an integrator circuit output capacitance and integration time. Moreover at high ambient light levels the system noise is dominant by shot noise and reducing the thermal noise does not help. The shot noise can be reduced by integrating the detected light over a longer duration but this is not always practical or desirable.

False triggers are a particular problem in a mobile device in which the IR emitter is behind the display. IR transmission of the display stack may only be around e.g. 2%, and the very small reflected light signal from the IR detector means that noise or a slight change in the reflected signal can easily result in a false release indication. Increasing the proximity ratio can address this, and one solution would be to increase the light energy output from the IR emitter, but as previously mentioned this can lead to on-screen distortion as the IR illumination can affect OLED behaviour.

Implementations of the described proximity detection system therefore increase the numerator, increasing the difference between the detect threshold value and release threshold value. This may be done by decreasing the infrared optical energy output of the IR emitter and/or by decreasing the analogue front end gain in the release mode. In this case the detector signal is greater in the detect mode than in the release mode.

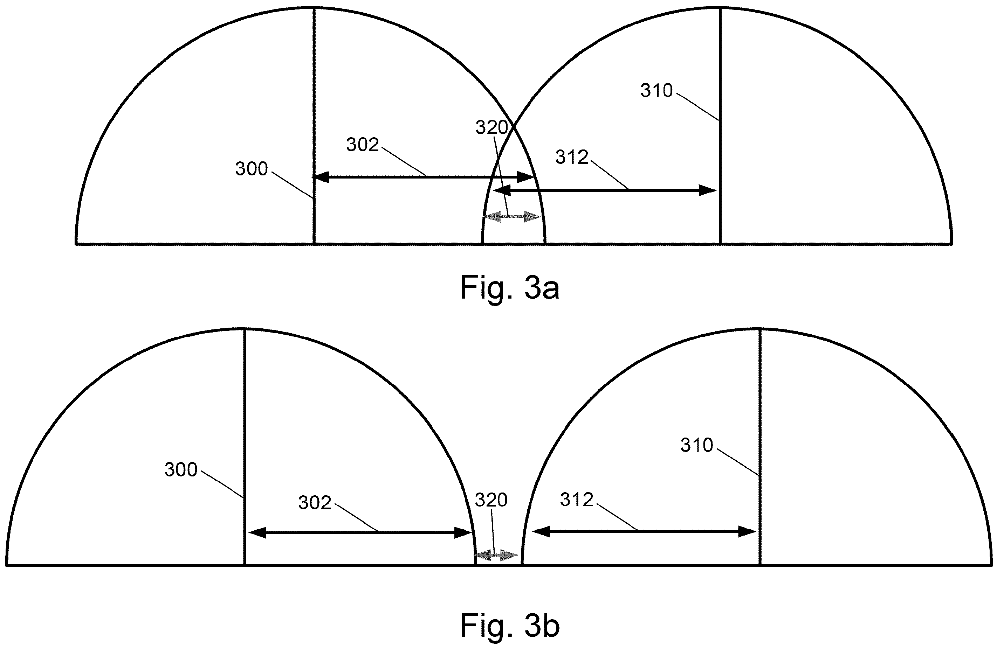

Figures 3a and 3b illustrates operating of the proximity detection system and the increased noise immunity. Each figure shows the detect threshold value 310 and release threshold value 300 and a diagrammatic illustration of the respective $6\sigma$ (peak-to-peak) noise 312, 302. A difference between $6\sigma$ (peak-to-peak) noise in each figure is represented by line 320. In Figure 3a the $6\sigma$ (peak-to-peak) noise for the detect and release threshold values overlaps and false triggers can be expected to result whereas in Figure 3b there is no overlap and no false triggers are expected for $6\sigma$ (peak-to-peak) noise.

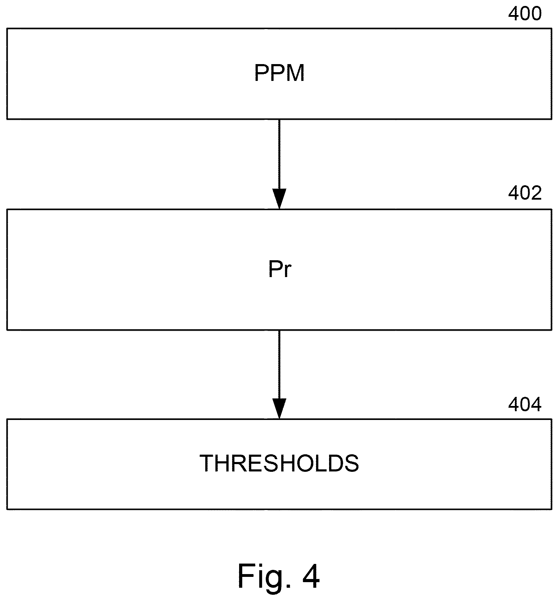

Figure 4 shows an example process for setting the detect threshold value and release threshold value for a particular false trigger rate.

Initially a false trigger rate may be defined (step 400), for example as a probability of false trigger, or p-value, corresponding to the false trigger rate expressed as a number $N$ of standard deviations of a distribution of the noise in the detector signal. For example a target failure rate of 0.1ppm (parts per million) corresponds to $N$ = 5.32. This conversion may be obtained e.g. from a standard normal table (z-table).

A value for the proximity ratio may then be determined (step 402) from $P_r = \frac{N}{C}$ where e.g. $C$ = 3 for $6\sigma$ (peak-to-peak) noise. This follows from Figure 3 where for no false triggers, and assuming that the RMS detector signal noise is the same for both detect and release modes:

$$detect\ threshold\ value - N\sigma > release\ threshold\ value + N\sigma$$

and hence $3P_r > N$. Continuing the foregoing example for $N$ = 5.32, $P_r$ > 1.77.

The proximity ratio may then be used to determine values for the detect and release threshold values (step 404). This step depends on the specific parameters of the application and the detector RMS noise level. This is illustrated below with a particular example.

Consider an arrangement in which the drive current of a BOLED (Behind the OLED) IR emitter is varied to vary the optical energy output. Given a detector signal noise level e.g. by assuming lighting conditions such as strong ambient sunlight (110K lux), and a target proximity ratio, in each of the detect and release modes the drive current is chosen to give a reasonable signal input to the signal processing subsystem 110 e.g. a reasonable number of ADC counts, without significant distortion of the OLED display screen in detect mode and sufficiently above the noise in release mode.

An example table with two sets of parameters is shown below for a pulsed IR emitter (two $75\mu s$ pulses). The false alarm rate is shown for a system in which the IR emitter drive current does not change (fixed at 10mA; left hand column of parameters, labelled "Single mode") and for a system in which the optical energy output is reduced in the release mode (to 8mA; right hand column of parameters, labelled "Detect and release-modes").

|  | Single mode | Detect and release-modes |
|---|---|---|
| IR emitter drive current in detect mode (mA) | 10 | 10 |
| IR emitter drive current in release mode (mA) | 10 | 8 |

(continued)

|  | Single mode | Detect and release-modes |
|---|---|---|
| Pulse Length ($\mu s$) | 75 | 75 |
| Number of pulses | 2 | 2 |
| Number of Averaging cycles | 4 | 4 |
| ADC detect threshold | 267.8 | 267.83 |
| ADC release threshold | 85.44 | 63.78 |
| Noise | 12.22 | 12.227 |
| Detect threshold - Release threshold | 182.38 | 204.04 |
| Proximity Ratio | 1.58 | 1.79 |
| **PPM false trigger rate** | **1.99** | **0.07** |

The false trigger rate is significantly improved when using a proximity detection system with detect and release modes and corresponding thresholds as previously described.

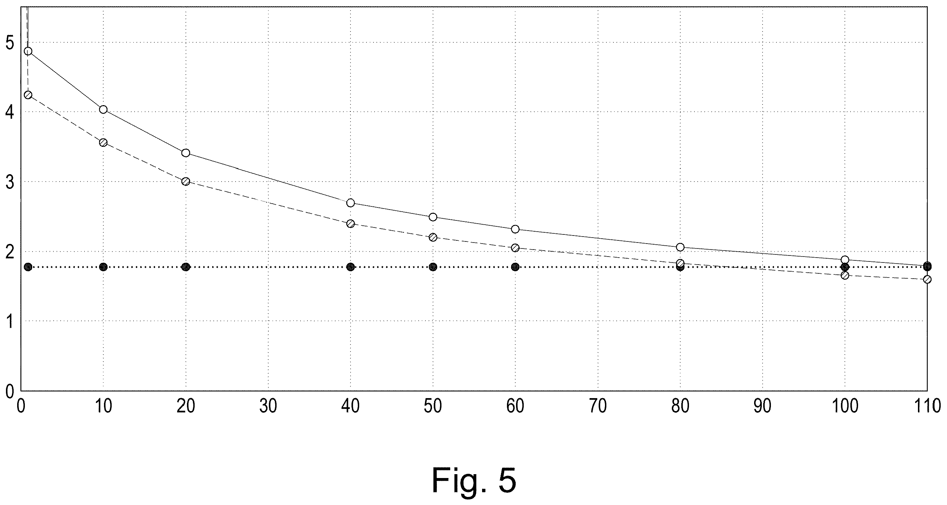

Figure 5 shows a graph of proximity ratio ($P_r$) on the y-axis against ambient light level in K-lux on the x-axis. The upper (solid) curve is for a proximity detection system with detect and release-modes as described herein; the lower (dashed) curve is for a single-mode proximity detection system i.e. a system which does not switch between detect and release modes of operation (and corresponding thresholds). The upper curve is for a system in which the IR output is reduced by 20% in the release mode. The horizontal dotted line represents a proximity ratio of 1.78, which corresponds to a 0.1ppm false trigger rate. The proximity ratio can be thought of as a measure of error tolerance.

Figure 5 illustrates that a system with detect and release modes of operation can maintain a less than 0.1ppm false trigger rate up to a high ambient light level (110K lux), unlike a single mode system.

List of reference numerals:

| 100 | proximity detection system |
| 101 | proximity detection processing |
| 102 | mobile device |
| 104 | display |
| 106 | infrared (IR) emitter |
| 108 | infrared detector |
| 110 | signal processing subsystem |
| 111 | analogue front end |
| 112 | programmable registers |
| 114 | data and/or clock signals |
| 116 | interrupt outputs |
| 200 | first IR light level set in detect mode |
| 202 | detect reflected light level and apply first calibration value |
| 204 | detect proximity of target using detect threshold |
| 205 | proximity detect signal |
| 206 | mobile device performs post-detect action |
| 207 | release enable signal |
| 208 | wait for release enable signal then select release mode |
| 210 | set second, lower IR light level |
| 212 | detect reflected light level and apply second calibration value |
| 214 | detect movement of target out of proximity using release threshold |
| 215 | release detect signal |
| 216 | mobile device performs post-release action |
| 217 | detect enable signal |
| 218 | select detect mode |
| 300 | release threshold value |
| 302 | release threshold value noise |

310    detect threshold value
312    detect threshold value noise
320    difference between release threshold noise and detect threshold value noise
400    define false trigger rate
402    determine proximity ratio
404    determine detect and release thresholds

Features of the system and method which have been described or depicted in combination e.g. in one embodiment, may be implemented separately or in sub-combinations, and features from different embodiments may be combined. Thus each feature disclosed or illustrated in the present specification may be incorporated in the invention, alone or in any appropriate combination with any other feature disclosed or illustrated herein. Features recited in separate dependent claims may be combined. Method steps should not be taken as requiring a particular order e.g. the order in which they are described or depicted, unless this is specifically stated.. A system may be configured to perform a task by providing processor control code and/or dedicated or programmed hardware e.g. electronic circuitry to implement the task. Use of "comprising" does not exclude other elements or steps, and "a" or "an" does not exclude a plurality. Reference signs in the claims should not be construed as limiting the claim scope.

Aspects of the method and system have been described in terms of embodiments but these embodiments are illustrative only and that the claims are not limited to those embodiments.

For example, the crosstalk calibration values $P_{offset\_detect}$ and $P_{offset\_release}$ may be applied in the analogue rather than in the digital domain, e.g. using an operational amplifier to subtract the crosstalk calibration values from the detector signal.

Although in some implementations of the proximity detection system may be used in a mobile phone e.g. behind the display, in some other implementations the mobile device may be e.g. a pair of earbuds.

Those skilled in the art will be able to make modifications and alternatives in view of the disclosure which are contemplated as falling within the scope of the claims.


**Claims**

1.    A proximity detection system (100) for a mobile device (102), comprising:

    an infrared emitter (106) to emit infrared light;
    an infrared detector (108) to detect the infrared light after reflection from a target and to provide a detector signal; and
    a signal processing subsystem (110) configured to control the proximity detection system into a first, detect mode for detecting proximity of the target as the target approaches the mobile device, and **characterized in that**, the signal processing subsystem (110) is configured to, after detection of the target, control the proximity detection system into a second, release mode for detecting movement of the target out of proximity to the mobile device; and the signal processing subsystem is configured to control the proximity detection system wherein for a given proximity of the target to the mobile device, the detector signal reduces when the mode switches from the detect mode to the release mode by reducing an optical energy output of the infrared emitter (106) and/or by reducing a gain of analogue or digital signal processing circuitry processing an output from the infrared detector (108); wherein the optical energy refers to optical energy, or power, averaged over a period of time.

2.    The system of claim 1 wherein the signal processing subsystem is configured to control the infrared emitter to emit a first level of optical energy in the detect mode and a second, lower level of optical energy in the release mode.

3.    The system of claim 2 wherein the signal processing subsystem is programmable to control the optical energy by controlling one or more of a drive level, a number of pulses of the infrared light, a pulse length of the infrared light and, where the system comprises a plurality of the infrared emitters, a number of the infrared emitters used to emit the infrared light.

4.    The system of any of claims 1-3 wherein the signal processing subsystem is configured to generate a proximity detect signal for the mobile device on detection of proximity of the target to enable the mobile device to perform a post-detect action, and to switch back to the detect mode in response to a detect enable signal from software running on the mobile device that indicates that a post-release action has been performed by the mobile device.

5.    The system of claim 4 wherein the proximity detect signal is a detect interrupt signal (116) generated by the signal processing system for the mobile device; and wherein the signal processing subsystem is configured to generate a release interrupt signal for the mobile device when the mode switches from the detect mode to the release mode.

6. The system of any of claims 1-5 further comprising a programmable detect threshold register (112) and a programmable release threshold register, wherein in the detect mode the a proximity detect signal for the mobile device on detection of proximity of the target to enable the mobile device to perform a post-detect action, and to switch back to the detect mode in response to a detect enable signal from software signal processing subsystem is configured to compare a value derived from the detector signal with a value in the detect threshold register, and in the release mode the signal processing subsystem is configured to compare a value derived from the detector signal with a value in the release threshold register.

7. The system of any of claims 1-6 further configured to store a crosstalk calibration value for each of the detect mode and the release mode, wherein an analogue front end of the system or the signal processing subsystem is configured to apply the respective crosstalk calibration value in each of the detect mode and the release mode.

8. A mobile device comprising the system of any of claims 1-7.

9. The mobile device of claim 8 wherein the mobile device has an OLED display (104), and wherein one or both of the infrared emitter and the infrared detector is located behind the OLED display.

10. A method of detecting proximity of a target to a mobile device (102) using a proximity detection system, comprising:

   illuminating the target with infrared light from an infrared emitter (106);
   detecting reflected light from the target to provide a detector signal by an infrared detector (108);
   detecting proximity of the target to the mobile device using the detector signal; **characterized in that** the method further comprises
   controlling the proximity detection system to reduce the detector signal by reducing an optical energy output of the infrared emitter (106) and/or by reducing a gain of analogue or digital signal processing circuitry processing an output from the infrared detector (108); and
   detecting movement of the target out of proximity to the mobile device;
   wherein the optical energy refers to optical energy, or power, averaged over a period of time.

11. The method of claim 10 wherein controlling the proximity detection system to reduce the detector signal comprises reducing an optical energy output from the infrared emitter.

12. The method of claim 10 or 11 wherein detecting proximity of the target to the mobile device using the detector signal comprises comparing a value derived from the detector signal with a detect threshold, and wherein detecting movement of the target out of proximity to the mobile device comparing a value derived from the detector signal with a release threshold different to the detect threshold.

13. The method of any of claims 10-12 further comprising setting a difference between the detect threshold and the release threshold to define a false trigger rate of the proximity detection system.

14. The method of claim 14 wherein the difference between the detect threshold and the release threshold defines a proximity ratio, $P_r$, according to:

$$P_r = \frac{(detect\ threshold) - (release\ threshold)}{6\sigma}$$

where $\sigma$ is the RMS noise level of the detector signal, and wherein setting the difference between the detect threshold and the release threshold to define the false trigger rate comprises selecting a value for $P_r$ according to $P_r = \frac{N}{C}$ where $N$ is a number of standard deviations of a distribution of the noise in the detector signal that defines a probability of false trigger corresponding to the false trigger rate, and C is a constant between 1 and 5.

15. Computer-readable instructions, or one or more computer storage media storing computer-readable instructions, that when executed by one or more computers cause the one or more computers to implement the proximity detection system of any of claims 1-9 or the method of any of claims 10-14.

**Patentansprüche**

1. Abstandserkennungssystem (100) für eine mobile Vorrichtung (102), umfassend

   einen Infrarotstrahler (106) zum Abstrahlen eines Infrarotlichts;
   einen Infrarotdetektor (108) zum Erkennen des Infrarotlichts nach einer Reflexion von einem Ziel und zum Bereitstellen des Detektorsignals; und
   ein Signalverarbeitungsteilsystem (110), das konfiguriert ist zum Steuern des Abstandserkennungssystems in einen ersten Erkennungsmodus zum Erkennen eines Abstands des Ziels, wenn sich das Ziel der mobilen Vorrichtung nähert, und **dadurch gekennzeichnet, dass** das Signalverarbeitungsteilsystem (110) konfiguriert ist, um nach dem Erkennen des Ziels das Abstandserkennungssystem in einen zweiten Freigabemodus zum Erkennen einer Bewegung des Ziels aus einem Abstand von der mobilen Vorrichtung hinaus, zu steuern; und wobei das Signalverarbeitungsteilsystem konfiguriert ist zum Steuern des Abstandserkennungssystems, wobei für einen gegebenen Abstand des Ziels von der mobilen Vorrichtung das Detektorsignal reduziert wird, wenn der Modus von dem Erkennungsmodus zu dem Freigabemodus umgeschaltet wird, indem eine Ausgabe einer optischen Energie des Infrarotstrahlers (106) reduziert wird und/oder indem eine Verstärkung einer analogen oder digitalen Signalverarbeitungsschaltung reduziert wird, die eine Ausgabe des Infrarotdetektors (108) verarbeitet;
   wobei sich die optische Energie auf eine optische Energie oder eine optische Leistung bezieht, die über einen Zeitraum gemittelt wurde.

2. System nach Anspruch 1, wobei das Signalverarbeitungsteilsystem konfiguriert ist zum Steuern des Infrarotstrahlers, um einen ersten Pegel einer optischen Energie in dem Erkennungsmodus abzustrahlen und einen zweiten niedrigeren Pegel einer optischen Energie in dem Freigabemodus abzustrahlen.

3. System nach Anspruch 2, wobei das Signalverarbeitungsteilsystem programmierbar ist zum Steuern der optischen Energie, indem eine oder mehrere eines Ansteuerungspegels, einer Anzahl von Pulsen des Infrarotlichts und einer Pulslänge des Infrarotlichts gesteuert werden und wobei das System eine Vielzahl von Infrarotstrahlern umfasst, wobei eine Anzahl von Infrarotstrahlern verwendet wird, um ein Infrarotlicht abzustrahlen.

4. System nach einem der Ansprüche 1 bis 3, wobei das Signalverarbeitungsteilsystem konfiguriert ist zum Erzeugen eines Abstandserkennungssignals für die mobile Vorrichtung, wenn ein Abstand des Ziels erkannt wird, um der mobilen Vorrichtung zu ermöglichen, eine Nacherkennungsaktion durchzuführen und als Reaktion auf ein Erkennungsaktivierungssignal, das anzeigt, dass eine Nachfreigabeaktion von der mobilen Vorrichtung ausgeführt wurde, und das von einer Software stammt, die in der mobilen Vorrichtung ausgeführt wird, zurück in den Erkennungsmodus zu schalten.

5. System nach Anspruch 4, wobei das Abstandserkennungssignal ein Erkennungsunterbrechungssignal (116) ist, das von dem Signalverarbeitungssystem für die mobile Vorrichtung erzeugt wird; und wobei das Signalverarbeitungsteilsystem konfiguriert ist zum Erzeugen eines Freigabeunterbrechungssignals für die mobile Vorrichtung, wenn der Modus von dem Erkennungsmodus in den Freigabemodus umgeschaltet wird.

6. System nach einem der Ansprüche 1 bis 5, das ferner ein programmierbares Erkennungsschwellenwertregister (112) und ein programmierbares Freigabeschwellenwertregister umfasst, wobei das eine Abstandserkennungssignal für die mobile Vorrichtung in dem Erkennungsmodus beim Erkennen des Abstands von dem Ziel geeignet ist, um die mobile Vorrichtung zu aktivieren, die Nacherkennungsaktion durchzuführen, und als Reaktion auf ein Erkennungsaktivierungssignal von der Software des Signalverarbeitungsteilsystems zurückzuschalten in den Erkennungsmodus, konfiguriert ist zum Vergleichen eines Werts, der aus dem Detektorsignal abgeleitet wird, mit einem Wert in dem Erkennungsschwellenwertregister, und wobei das Signalverarbeitungsteilsystem in dem Freigabemodus konfiguriert ist zum Vergleichen eines Werts, der aus dem Detektorsignal abgeleitet wird, mit einem Wert in dem Freigabeschwellenwertregister.

7. System nach einem der Ansprüche 1 bis 6, das ferner konfiguriert ist zum Speichern eines Kalibrierungswerts eines Übersprechens für jeden des Erkennungsmodus und des Freigabemodus, wobei ein analoges Frontend des Systems oder des Signalverarbeitungsteilsystems konfiguriert ist zum Anwenden des jeweiligen Kalibrierungswerts eines Übersprechens in jedem des Erkennungsmodus und des Freigabemodus.

8. Mobile Vorrichtung, die das System nach einem der Ansprüche 1 bis 7 umfasst.

9. Mobile Vorrichtung nach Anspruch 8, wobei die mobile Vorrichtung eine OLED-Anzeige (104) aufweist und wobei einer oder beide des Infrarotstrahlers und des Infrarotdetektors hinter der OLED-Anzeige angebracht ist oder sind.

10. Verfahren zum Erkennen eines Abstands eines Ziels von einer mobilen Vorrichtung (102) unter Verwendung eines Abstandserkennungssystems, umfassend:

Beleuchten des Ziels mit einem Infrarotlicht von einem Infrarotstrahler (106);
Erkennen eines von dem Ziel reflektierten Lichts, um ein Detektorsignal von einem Infrarotdetektor (108) bereitzustellen;
Erkennen eines Abstands des Ziels von der mobilen Vorrichtung unter Verwendung des Detektorsignals;
**dadurch gekennzeichnet, dass** das Verfahren ferner umfasst:

Steuern des Abstandserkennungssystems, um das Detektorsignal zu reduzieren, indem eine Ausgabe einer optischen Energie des Infrarotstrahlers (106) reduziert wird und/oder indem eine Verstärkung einer analogen oder digitalen Signalverarbeitungsschaltung reduziert wird, die eine Ausgabe des Infrarotdetektors (108) verarbeitet; und
Erkennen einer Bewegung des Ziels aus einem Abstand von der mobilen Vorrichtung heraus;
wobei sich die optische Energie auf eine optische Energie oder eine optische Leistung bezieht, die über einen Zeitraum gemittelt wurde.

11. Verfahren nach Anspruch 10, wobei das Steuern des Abstandserkennungssystems zum Reduzieren des Detektorsignals ein Reduzieren einer Ausgabe einer optischen Energie von dem Infrarotstrahler umfasst.

12. Verfahren nach Anspruch 10 oder 11, wobei das Erkennen des Abstands des Ziels von der mobilen Vorrichtung unter Verwendung des Detektorsignals ein Vergleichen eines Werts, der aus dem Detektorsignal abgeleitet wurde, mit einem Erkennungsschwellenwert umfasst, und wobei das Erkennen einer Bewegung des Ziels aus einem Abstand von der mobilen Vorrichtung heraus ein Vergleichen eines Werts, der aus dem Detektorsignal abgeleitet wurde, mit einem Freigabeschwellenwert umfasst, der verschieden von dem Erkennungsschwellenwert ist.

13. Verfahren nach einem der Ansprüche 10 bis 12, das ferner ein Einstellen einer Differenz zwischen dem Erkennungsschwellenwert und dem Freigabeschwellenwert umfasst, um eine falsche Triggerrate des Abstandserkennungssystems zu definieren.

14. Verfahren nach Anspruch 14, wobei die Differenz zwischen dem Erkennungsschwellenwert und dem Freigabeschwellenwert ein Abstandsverhältnis, $P_r$, definiert gemäß:

$$P_r = \frac{(\text{Erkennungsschwellenwert}) - (\text{Freigabeschwellenwert})}{6\sigma}$$

wobei $\sigma$ der RMS-Rauschpegel des Detektorsignals ist, und wobei das Einstellen der Differenz zwischen dem Erkennungsschwellenwert und dem Freigabeschwellenwert zum Definieren der falschen Triggerrate ein Auswählen eines Werts für $P_r$ gemäß $P_r = \frac{N}{C}$ umfasst, wobei N eine Anzahl von Standardabweichungen einer Verteilung des Rauschens in dem Detektorsignal ist, die eine Wahrscheinlichkeit eines falschen Triggers definiert, welche der falschen Triggerrate entspricht, und C eine Konstante zwischen 1 und 5 ist.

15. Computerlesbare Anweisungen oder ein oder mehrere Computerspeichermedien, in denen computerlesbare Anweisungen gespeichert sind, die, wenn sie von einem oder mehreren Computern ausgeführt werden, den einen oder die mehreren Computer veranlassen, das Abstandserkennungssystem nach einem der Ansprüche 1 bis 9 oder das Verfahren nach einem der Ansprüche 10 bis 14 zu implementieren.

**Revendications**

1. Système de détection de proximité (100) destiné à un dispositif mobile (102) comprenant :

   un émetteur infrarouge (106) destiné à émettre de la lumière infrarouge ;
   un détecteur infrarouge (108) destiné à détecter la lumière infrarouge après réflexion par une cible et à fournir un signal de détecteur ; et
   un sous-système de traitement de signal (110) configuré pour commander le système de détection de proximité dans un premier mode de détection de proximité de la cible lorsque la cible s'approche du dispositif mobile, et
   **caractérisé en ce que** le sous-système de traitement de signal (110) est configuré, après détection de la cible, pour commander le système de détection de proximité dans un deuxième mode de libération pour détecter un mouvement de la cible lorsqu'elle n'est pas à proximité du dispositif mobile ; et
   le sous-système de traitement de signal étant configuré pour commander le système de détection de proximité, le signal de détecteur réduisant, pour une proximité donnée de la cible par rapport au dispositif mobile, lorsque le mode passe du mode de détection au mode de libération,
   une sortie d'énergie optique de l'émetteur infrarouge (106) et/ou en réduisant un gain de circuits de traitement de signal analogiques ou numériques traitant une sortie du détecteur infrarouge (108) ;
   dans lequel l'énergie optique désigne une énergie ou une puissance optique moyennée sur une période de temps.

2. Système selon la revendication 1, dans lequel le sous-système de traitement de signal est configuré pour commander l'émetteur infrarouge afin qu'il émette un premier niveau d'énergie optique dans le mode de détection et un second niveau d'énergie optique inférieur dans le mode de libération.

3. Système selon la revendication 2, dans lequel le sous-système de traitement de signal est programmable pour commander l'énergie optique en commandant un ou plusieurs d'un niveau d'attaque, d'un nombre d'impulsions de la lumière infrarouge, d'une longueur d'impulsion de la lumière infrarouge et, dans lequel le système comprend une pluralité des émetteurs infrarouges, un nombre d'émetteurs infrarouges étant utilisés pour émettre la lumière infrarouge.

4. Système selon l'une quelconque des revendications 1-3, dans lequel le sous-système de traitement de signal est configuré pour générer un signal de détecteur de proximité pour le dispositif mobile lors de la détection de proximité de la cible pour permettre au dispositif mobile d'exécuter une action de post-détection, et pour revenir au mode de détection en réponse à un signal de validation de détection provenant d'un logiciel exécuté sur le dispositif mobile qui indique qu'une action de post-libération a été effectuée par le dispositif mobile.

5. Système selon la revendication 4, dans lequel le signal de détecteur de proximité est un signal d'interruption de détection (116) généré par le système de traitement de signal pour le dispositif mobile ; et dans lequel le sous-système de traitement de signal est configuré pour générer un signal d'interruption de libération pour le dispositif mobile lorsque le mode passe du mode de détection au mode de libération.

6. Système selon l'une quelconque des revendications 1-5, comprenant en outre un registre de seuil de détection programmable (112) et un registre de seuil de libération programmable, dans lequel, dans le mode de détection, le signal de détecteur de proximité pour le dispositif mobile lors de la détection de proximité de la cible permet au dispositif mobile d'effectuer une action de post-détection, et pour revenir au mode de détection en réponse à un signal de validation de détection provenant du sous-système de traitement de signal logiciel, il est configuré pour comparer une valeur dérivée du signal de détecteur à une valeur contenue dans le registre de seuil de détection, et dans le mode de libération, le sous-système de traitement de signal est configuré pour comparer une valeur dérivée du signal de détecteur à une valeur contenue dans le registre de seuil de libération.

7. Système selon l'une quelconque des revendications 1-6, configuré en outre pour stocker une valeur d'étalonnage de diaphonie pour chacun du mode de détection et du mode de libération, dans lequel une extrémité frontale analogique du système ou du sous-système de traitement de signal est configurée pour appliquer la valeur d'étalonnage de diaphonie respective dans chacun du mode de détection et du mode de libération.

8. Dispositif mobile comprenant le système selon l'une quelconque des revendications 1-7.

9. Dispositif mobile selon la revendication 8, dans lequel le dispositif mobile comporte un écran OLED (104), et dans lequel l'un ou les deux de l'émetteur infrarouge et du détecteur infrarouge sont situés derrière l'écran OLED.

10. Procédé de détection de proximité d'une cible par rapport à un équipement mobile (102) à l'aide d'un système de détection de proximité, comprenant :

   l'éclairage de la cible avec de la lumière infrarouge provenant d'un émetteur infrarouge (106),
   la détection, par un détecteur infrarouge (108), de la lumière réfléchie par la cible pour fournir un signal de détecteur ;
   la détection de la proximité de la cible par rapport au dispositif mobile à l'aide du signal de détecteur ;
   **caractérisé en ce que** le procédé comprend en outre la commande du système de détection de proximité pour réduire le signal de détecteur en réduisant une sortie d'énergie optique de l'émetteur infrarouge (106) et/ou en réduisant un gain de circuits de traitement de signal analogiques ou numériques traitant une sortie du détecteur infrarouge (108) ; et
   la détection d'un mouvement de la cible lorsqu'elle n'est pas à proximité du dispositif mobile ;
   dans lequel l'énergie optique désigne une énergie ou une puissance optique moyennée sur une période de temps.

11. Procédé selon la revendication 10, dans lequel la commande du système de détection de proximité pour réduire le signal de détecteur comprend la réduction d'une sortie d'énergie optique provenant de l'émetteur infrarouge.

12. Procédé selon la revendication 10 ou 11, dans lequel la détection de la proximité de la cible par rapport au dispositif mobile à l'aide du signal de détecteur comprend la comparaison d'une valeur dérivée du signal de détecteur à un seuil de détection, et dans lequel la détection du mouvement de la cible lorsqu'elle n'est pas à proximité du dispositif mobile compare une valeur dérivée du signal de détecteur à un seuil de libération différent du seuil de détection.

13. Procédé selon l'une quelconque des revendications 10-12 comprenant en outre le réglage d'une différence entre le seuil de détection et le seuil de libération pour définir un taux de déclenchement erroné du système de détection de proximité.

14. Procédé selon la revendication 14, dans lequel la différence entre le seuil de détection et le seuil de libération définit un rapport de proximité, $P_r$, selon :

$$P_r = \frac{(\text{seuil de détection}) - (\text{seuil de libération})}{6\sigma}$$

où $\sigma$ est le niveau de bruit efficace du signal de détecteur, et où le réglage de la différence entre le seuil de détection et le seuil de libération pour définir le taux de déclenchement erroné comprend la sélection d'une valeur pour $P_r$ selon

$P_r = \frac{N}{C}$ où N est un nombre d'écarts types d'une distribution du bruit dans le signal de détecteur qui définit une probabilité de déclenchement erroné correspondant au taux de déclenchement erroné, et C est une constante comprise entre 1 et 5.

15. Instructions lisibles par ordinateur, ou un ou plusieurs supports de stockage informatiques stockant des instructions lisibles par ordinateur qui, lorsqu'elles sont exécutées par un ou plusieurs ordinateurs, amènent le ou les ordinateurs à mettre en œuvre le système de détection de proximité selon l'une quelconque des revendications 1-9 ou le procédé selon l'une quelconque des revendications 10-14.

Fig. 1a

Fig. 1b

200

IR1

202

IR Rx CAL 1

204

TARGET PROX

205

206

MD ACTION

207

208

RELEASE

210

IR2

212

IR Rx CAL 2

214

TARGET NOT PROX

215

216

MD ACTION

217

218

DETECT

Fig. 2

Fig. 3a

Fig. 3b

400

```
┌────────────────────────────────────┐
│                                    │
│               PPM                  │
│                                    │
└────────────────────────────────────┘
```

402

```
┌────────────────────────────────────┐
│                                    │
│                Pr                  │
│                                    │
└────────────────────────────────────┘
```

404

```
┌────────────────────────────────────┐
│                                    │
│            THRESHOLDS              │
│                                    │
└────────────────────────────────────┘
```

Fig. 4

Fig. 5

**EP 4 183 125 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2014252212 A
- US 8692200 B
- US 9608132 B
- US 2016259462 A